# FASCICULE DE BREVET EUROPEEN

(11) **EP 0 411 527 B1**
(45) Date de publication et mention de la délivrance du brevet: **05.02.1997**
(21) Numéro de dépôt: 90114569.8
(22) Date de dépôt: 30.07.1990
(51) Int. Cl.: C03B 37/018

(54) **Procédé de fabrication d'une fibre optique à gaine dopée**
Verfahren zur Herstellung einer optischen Faser mit dotiertem Mantel
Process for producing an optical fibre with a doped cladding

(30) Priorité: 02.08.1989 FR 8910420
(43) Date de publication de la demande: 06.02.1991
(73) Titulaire: ALCATEL FIBRES OPTIQUES, F-95871 Bezons Cedex (FR)
(72) Inventeur: Le Sergent, Christian, F-91460 Marcoussis (FR); Ramos, Josiane, F-91070 Bondoufle (FR)
(74) Mandataire: Weinmiller, Jürgen

(56) Documents cités:
- EP-A- 0 041 864
- EP-A- 0 061 901
- EP-A- 0 185 975
- EP-A- 0 191 202
- EP-A- 0 283 748
- EP-A- 0 309 027
- WO-A-86/04689
- DE-A- 3 040 363
- FR-A- 2 438 017
- FR-A- 2 512 215
- GB-A- 2 032 910

## Description

La présente invention concerne les fibres optiques.

Les fibres optiques connues présentant les pertes de lumière les plus faibles sont celles dites "à coeur de silice". Leur coeur est constitué de silice non dopée ou peu dopée. Leur gaine optique est constituée de silice dopée au fluor à une concentration provoquant un abaissement d'indice de réfraction allant de 4.10⁻³ à 6.10⁻³ environ.

Ces fibres sont réalisées par tirage à chaud à partir de préformes. Ces dernières sont fabriquées en effectuant des dépôts chimiques en phase vapeur à l'intérieur de tubes substrats selon les procédés connus dits CVD, MCVD, PCVD, PMCVD, SPCVD, etc..., puis en soumettant les préformes tubulaires ainsi obtenues à des opérations de rétreint.

Les fibres qui en sont issues comportent :
- un coeur d'indice haut (c'est-à-dire d'indice de réfraction relativement haut, cet indice étant en général sensiblement celui de la silice pure),
- une gaine d'indice bas (c'est-à-dire d'indice de réfraction abaissé par dopage de la silice, en général par du fluor),
- et ce couche externe d'indice haut (c'est-à-dire d'indice de réfraction voisin de celui du coeur).

Le document FR-2 512 215 concerne ainsi des fibres dont la structure permet d'obtenir des caractéristiques spécifiques en dispersion chromatigue. Il suggère un procédé possible de fabrication d'une telle fibre, comprenant les opérations suivantes :
- dépôt d'une première couche de gaine en silice dopée au fluor à l'intérieur d'un tube en silice pure,
- dépôt d'une deuxième couche de gaine en silice dopée au fluor sur la première couche,
- dépôt d'une couche de coeur de silice pure sur la couche de gaine.

Le document WO 86/04689 décrit une fibre de structure et d'application essentiellement similaires à celles de la fibre décrite dans le document FR-2 512 215. Le procédé suggéré par ce document pour réaliser une telle fibre comprend les étapes suivantes :
- dépôt d'une première couche de gaine à l'intérieur d'un tube en silice,
- dépôt d'une deuxième couche de gaine sur la première couche,
- dépôt d'une couche de coeur sur la couche de gaine.

Ce procédé pose les mêmes problèmes que celui du document FR-2 512 215. Dans les deux cas, le tube de dépôt étant un tube de silice pure, la couche en résultant possède un indice de réfraction élevé, voisin de celui du coeur, ce qui provoque une fuite de la lumière qui se propage selon le mode guidé par la fibre, et donc une augmentation des pertes optiques par perte de la lumière utile.

Pour éviter cette perte, deux remèdes ont été proposés. L'un est d'augmenter le rapport de l'épaisseur de la gaine optique au rayon du coeur. Mais il augmente le coût de fabrication de la préforme. L'autre remède proposé est d'assurer le confinement maximal pour une longueur d'onde de coupure aussi grande que possible. Mais il augmente la dispersion temporelle et réduit la fenêtre de transmission de la fibre, c'est-à-dire l'intervalle de longueurs d'ondes lumineuses dans laquelle elle permet une transmission efficace.

La présente invention a notamment pour but d'utiliser un remède différent pour éviter la perte de lumière mentionnée ci-dessus. Et elle a pour objet un procédé de fabrication d'une fibre optique à gaine dopée tel qu'énoncé dans la revendication 1.

La présente invention sera mieux comprise grâce à la description qui va être donnée ci-après avec l'aide des figures ci-jointes. Il doit être compris que les éléments décrits et représentés le sont à titre d'exemple non limitatif, même lorsqu'il est précisé que certaines dispositions représentées sont préférées dans le cadre de cette invention.

Lorsqu'un même élément est représenté sur plusieurs figures il y est désigné par le même signe de référence.

La figure 1 représente une vue en coupe transversale d'un tube substrat fabriqué dans une première étape d'un procédé selon la présente invention.

La figure 2 représente une vue en coupe transversale d'une préforme tubulaire réalisée par ce procédé à partir de ce tube.

La figure 3 représente une vue en coupe transversale d'une préforme rétreinte issue de cette préforme tubulaire. Elle représente en même temps, à échelle agrandie, une vue en coupe transversale d'une fibre réalisée à partir de cette préforme rétreinte.

La figure 4 représente un diagramme de variation de l'indice de réfraction, représenté en ordonnées, dans cette fibre, en fonction de la distance représentée en abscisses, à l'axe de cette fibre.

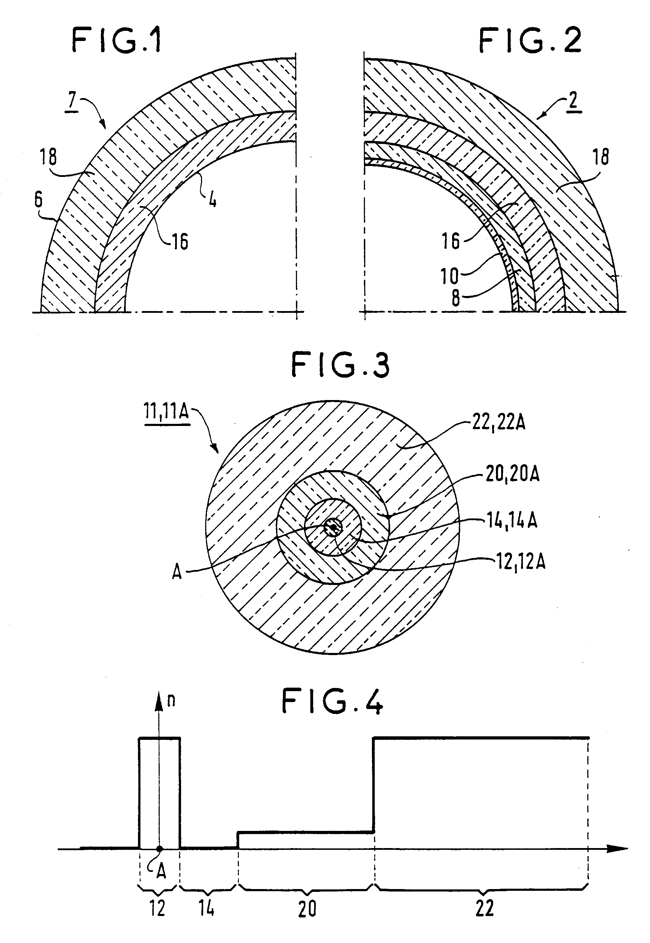

Le tube sustrat 2 est représenté sur la figure 1. Il présente deux surfaces, l'une interne 4 formée par la couche substrat 16, l'autre externe 6 formée par la couche de maintien 18.

Lesdites couches de gaines et de coeur de la préforme 7 sont représentées en 8 et 10 sur la figure 2. Le coeur et la gaine optique de la fibre optique finale 11 sont représentés en 12 et 14 sur les figures 3 et 4 et l'axe de cet fibre en A.

On va maintenant indiquer diverses dispositions qui sont préférées selon la présente invention et qui sont mises en oeuvre dans le procédé donné en exemple :
- Le dopage de la silice de ladite couche substrat 16 entraîne un abaissement d'indice de réfraction, par rapport à l'indice de réfraction de la silice pure, égal à au moins 80 % de l'abaissement d'indice de réfraction de la silice de ladite couche de gaine 8.
- Ledit matériau de dopage dans ladite couche de gaine 8 est le fluor, et le fluor ou l'oxyde de bore dis ladite couche substrat 16, lesdites couches de coeur 10 et de maintien 18 étant constituées de silice sensiblement pure ou dopée à l'oxyde de bore.
- L'épaisseur de ladite couche substrat 16 est comprise entre la moitié et cent vingt cinq fois celle de ladite couche de gaine 8, de préférence entre une et trois fois.
- L'épaisseur de ladite couche de maintien 18 est comprise entre 10 % et 1000 % de celle de ladite couche substrat 16, de préférence entre 50 et 200 %.

La fibre 11 obtenue par ce procédé est représentée sur la figure 3. Elle comporte, comme des fibres connues :
- un coeur 12 issu de ladite couche de coeur 10 et présentant un indice de réfraction haut,
- une gaine optique 14 issue de ladite couche de gaine 8 et présentant un indice de réfraction bas,
- et une couche d'enrobage 20 issue de ladite couche substrat 16.

Elle comporte en outre, selon une disposition résultant de ce procédé, une couche supplémentaire 22 issue de la couche de maintien 18 et présentant un indice haut alors que la couche d'enrobage 20 présente un indice bas voisin de celui de la gaine 14.

La Figure 3 représente également la préforme rétreinte 11A avec la couche supplémentaire 22A, la couche substrat rétreinte 20A, la couche de gaine retreinte 14A et le coeur de préforme 12A.

L'utilisation de la couche de maintien 18 permet d'éviter des difficultés qui résulteraient autrement du fait que la température de ramollissement de la couche substrat 16 est inférieure d'environ 100° C à celle de la silice non dopée, à savoir :
a) des difficultés de fabrication de la préforme telles que des déformations au cours des opérations de dépôt des couches de gaine et de coeur,
b) l'apparition de contraintes d'extension dans le coeur de la fibre finale.

Les épaisseurs et les concentrations massiques en fluor peuvent être approximativement les suivantes :
- couche de maintien : 1 mm et 0 %
- couche substrat : 1 mm et 1 %
- couche de gaine : 1 mm et 1 %
- couche de coeur : 40 micromètres et moins de 0,1 %.

Le tube substrat composite 2 peut être réalisé par chemisage interne d'un tube primaire de silice non fluorée par un tube secondaire fluoré, selon les techniques habituellement utilisées dans l'industrie verrière, avec l'aide d'une surpression ou d'une dépression. On peut aussi partir d'un tube primaire constitué de silice fluorée et manchonner extérieurement ce tube primaire avec un tube de silice non fluorée.

S'il s'agit d'éviter seulement la mise en extension du coeur de la fibre finale, le tube substrat peut être constitué seulement de la couche substrat et une couche supplémentaire de silice pure peut être apportée seulement autour d'une préforme rétreinte pour constituer une pré forme rétreinte revêtue semblable à la préforme 11A.

## Revendications

1. Procédé de fabrication d'une fibre optique à gaine dopée, ce procédé comportant les opérations suivantes pour former une fibre finale:
- fabrication d'un tube substrat (2) à base de silice, comportant une couche substrat (16) tubulaire constituée d'une silice de substrat,
- dépôt d'une couche de gaine tubulaire (8) sur la surface intérieure dudit tube substrat, cette couche de gaine étant constituée d'une silice de gaine qui est dopée par un matériau de dopage qui abaisse son indice de réfraction pour que cette couche de gaine donne ultérieurement naissance à une gaine optique (14) de ladite fibre finale, ce matériau de dopage abaissant en même temps la température de ramollissement de la silice, cette opération de dépôt étant effectuée à une température approchant la température de ramollissement de cette couche,
- dépôt d'une couche de coeur tubulaire (10) sur ladite couche de gaine tubulaire pour former une préforme tubulaire (7), cette couche de coeur étant constituée d'une silice de coeur non dopée ou dopée différemment de ladite silice de gaine de manière à donner ultérieurement naissance à un coeur (12) de ladite fibre finale,
- rétreint à chaud de cette préforme tubulaire pour former une préforme rétreinte pleine (11A) comportant une couche substrat rétreinte (20A), une couche de gaine rétreinte (14A) et un coeur de préforme (12A) issus desdites couches substrat tubulaire, de gaine tubulaire et de coeur tubulaire, respectivement,
- et étirage à chaud de cette préforme rétreinte pour former ladite fibre finale,
ce procédé étant caractérisé par le fait que ladite couche substrat tubulaire (16) est un tube préformé, ladite silice de substrat est dopée par un matériau de dopage pour abaisser son indice de réfraction de manière à éviter des pertes de lumière dans ladite fibre finale (11), et ledit tube substrat est un tube composite comportant en outre une couche de maintien (18) entourant ladite couche substrat tubulaire (16) et constituée d'une silice supplémentaire non dopée ou dopée différemment de ladite silice de substrat de manière à présenter un température de ramollissement plus élevée que celle de cette couche substrat.

2. Procédé selon la revendication 1, caractérisé par le fait que le dopage de ladite silice de substrat (16) entraîne un abaissement d'indice de réfraction, par rapport à l'indice de réfraction de la silice pure, égal à au moins 80% de l'abaissement l'indice de réfraction de ladite silice de gaine (8).

3. Procédé selon la revendication 1, caractérisé par le fait que ledit matériau de dopage de ladite silice de gaine (8) est le fluor, celui de ladite silice de substrat (16) étant le fluor ou l'oxyde de bore, lesdites silices de coeur (10) et de maintien (18) étant sensiblement pures ou dopées.

4. Procédé selon la revendication 1, caractérisé par le fait que l'épaisseur de ladite couche substrat (16) est comprise entre la moitié et cent vingt cinq fois celle de ladite couche de gaine (8).

5. Procédé selon la revendication 4, caractérisé par le fait que l'épaisseur de ladite couche de maintien (18) est comprise entre 10 et 1000% de celle de ladite couche substrat (16).

6. Procédé selon la revendication 1, caractérisé par le fait que lesdites opérations de dépôt de couches de gaine (8) et de coeur (10) sont effectuées par des dépôts chimiques en phase vapeur.

## Claims

1. A method of fabricating an optical fiber having doped cladding, the method comprising the following operations for forming a final fiber:
fabricating a silica-based substrate tube (2) comprising a tubular substrate layer (16) constituted by substrate silica which is doped with a doping material for reducing its refractive index so as to avoid light losses in said final fiber (11);
depositing a tubular cladding layer (8) on the inside surface of said substrate tube, said cladding layer being constituted by cladding silica which is doped with a doping material that reduces its refractive index so that said cladding layer gives rise subsequently to optical cladding (14) of said final fiber, said doping material simultaneously reducing the softening temperature of the silica, said deposition operation being performed at a temperature close to the softening temperature of the layer;
depositing a tubular core layer (10) on said tubular cladding layer to form a tubular preform (7), said core layer being constituted by core silica which is not doped or which is doped differently from said cladding silica so as to give rise subsequently to a core (12) of said final fiber;
hot collapsing said tubular preform to form a solid collapsed preform (11A) comprising a collapsed substrate layer (20A), a collapsed cladding layer (14A), and a preform core (12A) derived respectively from said tubular substrate layer, from said tubular cladding layer, and from said tubular core layer; and
hot drawing said collapsed preform to form said final fiber,
the method being characterized by the fact that said tubular substrate layer (16) is a preformed tube, said substrate silica is doped with a doping material in order to reduce its refractive index so as to avoid loss of light in said final fiber (11), and said substrate tube is a composite tube further comprising a support layer (18) surrounding said tubular substrate layer (16) and constituted by additional silica which is not doped or which is doped differently from said substrate silica so as to present a softening temperature which is higher than the softening temperature of said substrate layer.

2. A method according to claim 1, characterized by the fact that the doping of said substrate silica (16) causes its refractive index to be reduced relative to the refractive index of pure silica by an amount equal to not less than 80% of the refractive index reduction in said cladding silica (8).

3. A method according to claim 1, characterized by the fact that said doping material of said cladding silica (8) is fluorine, the doping material of said substrate silica (16) being fluorine or boron oxide, and the core silica (10) and the support silica (18) being substantially pure or doped.

4. A method according to claim 1, characterized by the fact that the thickness of said substrate layer (16) lies between one half and one hundred twenty-five times the thickness of said cladding layer (8).

5. A method according to claim 4, characterized by the fact that the thickness of said support layer (18) lies in the range 10% to 1000% of the thickness of said substrate layer (16).

6. A method according to claim 1, characterized by the fact that said operations of depositing the cladding layer (8) and the core layer (10) are performed by chemical vapor phase deposition operations.

## Patentansprüche

1. Verfahren zur Herstellung einer Lichtleitfaser mit dotierter Hülle, wobei dieses Verfahren die folgenden Arbeitsgängen aufweist, um eine endgültige Faser zu bilden:
- Herstellung eines Substratrohrs (2) auf der Basis von Siliziumoxid, das eine rohrförmige Substratschicht (16) enthält, die aus einem Substrat-Siliziumoxid besteht,
- Aufbringen einer rohrförmigen Hüllschicht (8) auf die Innenoberfläche des Substratrohrs, wobei diese Hüllschicht aus einem Hüll-Siliziumoxid besteht, das mit einem Dotiermaterial dotiert ist, welches seinen Brechungsindex senkt, damit diese Hüllschicht später eine optische Hülle (14) der endgültigen Faser bildet, wobei dieses Dotiermaterial gleichzeitig die Erweichungstemperatur des Siliziumoxids senkt und dieses Aufbringen bei einer Temperatur erfolgt, die nahe der Erweichungstemperatur dieser Schicht liegt,
- Aufbringen einer rohrförmigen Kernschicht (10) auf die rohrförmige Hüllschicht, um einen rohrförmigen Rohling (7) zu bilden, wobei diese Kernschicht aus einem nicht dotierten oder anders als das Hüll-Siliziumoxid dotierten Kern-Siliziumoxid besteht, um später einen Kern (12) der endgültigen Faser zu bilden.
- Heißschrumpfen dieses rohrförmigen Rohlings, um einen massiven geschrumpften Rohling (11A) zu bilden, der eine geschrumpfte Substratschicht (20A), eine geschrumpfte Hüllschicht (14A) und einen Rohlingkern (12A) aufweist, die aus der rohrförmigen Substratschicht, der rohrförmigen Hüllschicht und dem rohrförmigen Kern entstanden sind,
- und Heißziehen dieses Rohlings, um die endgültige Faser zu bilden,
dadurch gekennzeichnet, daß die rohrförmige Substratschicht (16) ein vorgeformtes Rohr ist, daß das Substrat-Siliziumoxid mit einem Material dotiert ist, das seinen Brechungsindex derart senkt, daß Lichtverluste in der endgültigen Faser (11) vermieden werden, und daß das Substratrohr ein Verbundrohr ist, das außerdem eine Halteschicht (18) aufweist, die die rohrförmige Substratschicht (16) umgibt und aus einem zusätzlichen Siliziumoxid besteht, das nicht dotiert oder anders als das Substrat-Siliziumoxid dotiert ist, um eine höhere Erweichungstemperatur als diese Substratschicht aufzuweisen.

2. Verfahren nach Anspruch 1, dadurch gekennzeichnet, daß die Dotierung des Substrat-Siliziumoxids (16) eine Senkung des Brechungsindex im Vergleich zum Brechungsindex des reinen Siliziumoxids um mindestens 80% der Absenkung des Brechungsindex des Siliziumoxids der Hüllschicht (8) bewirkt.

3. Verfahren nach Anspruch 1, dadurch gekennzeichnet, daß das Dotiermaterial der Hüllschicht (8) Fluor und das Dotiermaterial der Substratschicht (16) Fluor oder Boroxid ist, während das Kern-Siliziumoxid (10) und das Halte-Siliziumoxid (18) im wesentlichen rein oder dotiert sind.

4. Verfahren nach Anspruch 1, dadurch gekennzeichnet, daß die Dicke der Substratschicht (16) zwischen 0,5 mal und 125 mal die Dicke der Hüllschicht (8) beträgt.

5. Verfahren nach Anspruch 4, dadurch gekennzeichnet, daß die Dicke der Halteschicht (18) zwischen 10% und 1000% der Dicke der Substratschicht (16) liegt.

6. Verfahren nach Anspruch 1, dadurch gekennzeichnet, daß die Arbeitsgänge des Aufbringens der Hüllschicht (8) und der Kernschicht (10) durch chemisches Aufbringen in der Dampfphase erfolgen.
